# EUROPEAN PATENT SPECIFICATION

(11) **EP 1 278 183 B1**
(45) Date of publication and mention of the grant of the patent: **10.01.2007**
(21) Application number: 02252890.5
(22) Date of filing: 24.04.2002
(51) Int. Cl.: G10L 15/26

(54) **Voice operated electronic appliance**
Sprachgesteuertes elektronisches Gerät
Appareil électronique à commande vocale

(30) Priority: 19.07.2001 KR 2001043581
(43) Date of publication of application: 22.01.2003
(73) Proprietor: SAMSUNG ELECTRONICS CO., LTD., Suwon-City, Kyungki-do (KR)
(72) Inventor: Oh, Yoon-hark, c/o Audio Lab, DM Res.Inst., Paldal-gu, Suwon-city, Gyunggi-do (KR); Cha, Soon-back, Sangju-city, Gyungsangbuk-do (KR)
(74) Representative: Robinson, Ian Michael

(56) References cited:
- EP-A- 0 867 860
- WO-A-01/50665
- WO-A-01/61987
- US-A- 5 267 323
- PATENT ABSTRACTS OF JAPAN vol. 012, no. 440 (E-684), 18 November 1988 (1988-11-18) & JP 63 171071 A (MATSUSHITA COMMUN IND CO LTD), 14 July 1988 (1988-07-14)
- USAGAWA; MORITA; EBATA: 'Remote Control System Using Speech Reduction of Known Noise' ICSLP 18 November 1990, KOBE, JAPAN, XP000503367
- GOPALAN; BENINCASA; WENNDT: 'Data Embedding in Audio Signals' AEROSPACE CONFERENCE 10 March 2001, PISCATAWAY, NJ, USA, XP010548394

## Description

The present invention relates to an electronic appliance such as a television, and more particularly, to an electronic appliance capable of controlling the operation thereof by speech recognition.

As speech recognition technology developed, an electronic appliance capable of controlling the operation thereof by recognizing a user's speech and inputting a corresponding command has developed. When a user pronounces the sound "Play" or "Record", the appliance recognizes the sound pattern of the speech, generates a corresponding command code, and controls the operation according to the command code.

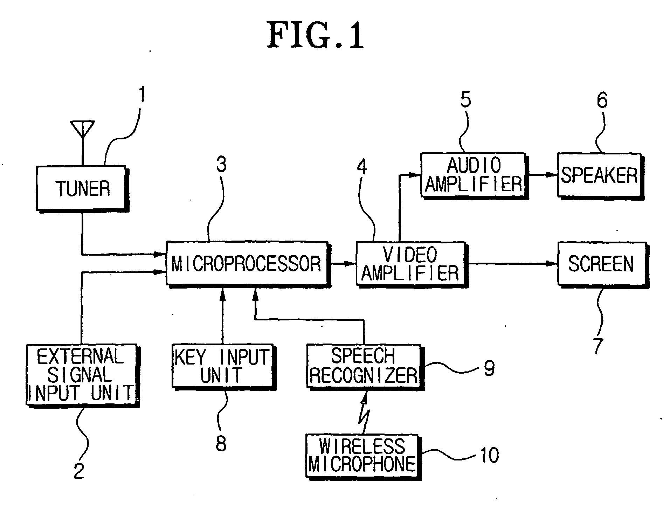

Figure 1 indicates a briefly illustrated picture of a television as an example of the electronic appliance capable of controlling the operation thereof through speech recognition. A conventional television has a tuner 1 for receiving broadcast signals, an external signal input unit for receiving the signals reproduced from an image reproducer such as a VTR (Video Tape Recorder), a microprocessor 3 for selectively outputting the signals inputted from the tuner 1 and the external signal input unit 2, a video amplifier 4 for amplifying the video signals among the signals output from the microprocessor 3, a screen 7 for displaying the amplified video signal, an audio amplifier 5 for amplifying the audio signals among the signals output from the microprocessor 3, and a speaker 6 for amplifying and outputting the amplified audio signals so as to be audible. Also the conventional television has a key input unit 8 for allowing a user to input the control signals.

Also, the television has a speech recognizer 9 for recognizing a user's speech and sending a command corresponding to the microprocessor 3, and a wireless microphone 10 for receiving the sound pronounced by the user and transmitting it to the speech recognizer 9 in wireless fashion. In this situation, the speech recognizer 9 has the frequency band information of the user's speech. The speech recognizer 9 has a filter (not shown) which passes the sound signals that belong to the frequency band of the user's speech and blocks the sounds that belong to the frequency band other than the band of the user's speech. In the meantime, the wireless microphone 10 has a remote control function as it has a key input panel (not shown) which can control television operation wirelessly. The wireless microphone 10 includes a mode conversion key that enables conversion between a general mode and a speech recognition mode of a television.

In the conventional television control using speech recognition, the user converts the mode of a television into the speech recognition mode by selecting the mode conversion key provided on the wireless microphone 10 while watching television. When the television is converted into the speech recognition mode, the user pronounces a sound corresponding to a desired command into the wireless microphone 10. At this moment, the wireless microphone 10 does not only receive a human's speech but also the sound output from a speaker 6, and these two types of signals received are provided to the speech recognizer 9. The speech recognizer 9 passes the signal belonging to the frequency band of the user's sound and blocks the rest of the signals including the audio signals output from the speaker 6. Then the speech recognizer 9 recognizes the speech pattern of the received user's speech, detects the command corresponding to the recognized speech pattern, and transmits it to the microprocessor 3.

However, in such a conventional television, when the sound frequency band of the audio signals output from the speaker 6 overlaps that of the user's speech, it is difficult for the speech recognizer 9 to detect and remove all of the audio signal from the received sounds. In addition, if the sound of the audio signals output from the speaker 6 belongs to the pass band of the speech recognizer 9, and corresponds to the sound that can control the television, the speech recognizer 9 mistakes the sound output from the speaker 6 for a control signal resulting in a problem of causing the malfunction of the television.

To avoid the above problem, the user can pronounce a sound corresponding to the operation command into the wireless microphone 10 after setting the speaker 6 to mute while viewing the television. Then the speech recognizer 9 only receives the user's speech enabling to transmit the corresponding command to the microprocessor 3. However, it is impossible for the user to listen to the sound from the speaker 6 while giving the command to the speech recognizer 9, thereby resulting in inconvenience in watching the television.

This kind of problem equally occurs between any electronic appliances which can generate sound and the ones which can be operated in accordance with a received speech command. The examples of the electronic appliances that can generate sounds are a television and a radio, and the examples that can be operated according to the received sounds are all electronic devices such as a television, a radio, a VTR, an electric rice cooker, a vacuum cleaner, an air conditioner and an electric fan.

To explain the conventional operations activated by speech recognition with the examples of a radio which can output sounds and an electric fan which can perform a corresponding action by receiving speech, when a sound that belongs to the frequency band an electric fan can recognize and can operate the electric fan is produced by the radio, the fan mistakes the sound for a user's control speech, and as a result, a command corresponding to the sound given by the radio may be performed. Accordingly, the electronic fan performs operation that is not intended by the user. In addition, if the sound output from the radio and speech of the user are concurrently input, the speech command may not be performed properly as there is difficulty in separating and removing the audio signal from the speaker.

Tsuyoshi Usagawa, Yuji Morita, Masanao Ebata: Remote Control System using Speech Reduction of Known Noise, Proceedings of the International Conference on Spoken Language Processing (ICSLP). Kobe, Nov. 18-22, 1990, Tokyo, ASJ, JP, 1990-11-18, XP000503367 discloses the use of an adaptive filter to remove ambient noise from an audio signal.

An aim of the present invention is to provide an electronic appliance operated by speech recognition, which can prevent malfunction caused by receiving background noise such as a sound output from a speaker. Another aim is to provide an electronic appliance that can generate sounds from a speaker therein, whilst minimising unintentional background noise that affects a speech recognition function of this or other appliances.

The invention is as it is set forth in independent claims 1 and 5.

According to a first aspect of the present invention there is provided an electronic appliance comprising: a speaker for outputting an audio signal; a sound receiver for receiving an external sound; a determiner for determining whether a signal of the external sound received in the sound receiver is the audio signal output from the speaker; a speech recognizer for recognizing the external sound and outputting a command corresponding to the external sound when the determiner determines that the signal of the external sound is different from the audio signal; and a control unit for receiving the command and performing an operation corresponding to the command, further comprising an identifying information provider for adding predetermined identifying information to the audio signal, wherein the determiner determines whether the signal of the external sound is the audio signal based on existence of the identifying information in the signals of the external sound received by the speech recognizer.

Preferably, the electronic appliance according to the present invention further comprises a watermark generator for adding a predetermined identifying information which is an identifying information of the audio signal. In such a situation, the determiner determines whether the signal of the external sound is the audio signal based on existence of the identifying information in the signals of the external sound received by the speech recognizer.

Meanwhile, the determiner preferably comprises: a detector for searching for the watermark information inserted in the signal of the external sound received in the sound receiver; a sound remover for removing the audio signal including the watermark information using the spectrum information detected in the detector in case the watermark information is detected; and a speech signal recognizer for identifying the existence of a speech signal based on an energy level of the signal of the external sound from which the audio signal is removed.

In the electronic appliance according to the present invention, it is possible to set the operating mode thereof, whereby whether the identifying information provider operates or not can be selected by the user.

The identifying information is watermark information including spectrum information of the signal of the external sound. The determiner determines existence of the identifying information based on existence of the watermark information in the signal of the external sound received in the speech recognizer.

The determiner preferably comprises: a detector for searching for the watermark information inserted in the signal of the external sound received in the sound receiver; a sound remover for removing the audio signal including the watermark information using the spectrum information detected in the detector in case the watermark information is detected; and a speech signal recognizer for identifying the existence of a speech signal based on an energy level of the signal of the external sound from which the audio signal is removed.

According to another aspect of the present invention there is provided a method for receiving sound, comprising the steps of: a) outputting an audio signal through a speaker; b) removing the audio signal from a signal of an external sound in case the audio signal is included in the signal of the external sound; outputting a command corresponding to the external sound by recognizing the external sound; and receiving the command and controlling an operation corresponding to the command, further comprising a step of adding predetermined identifying information to the audio signal before the step a), wherein, in the step b), existence of the audio signal is determined based on existence of the identifying information in the signal of the external sound.

Advantageously, the malfunction of the electronic appliance can be prevented, since the watermark information is added to the audio signal output from the speaker in the speech recognition mode of a television, and the existence of watermark information in the received external sound signal is detected by the detector.

For a better understanding of the invention, and to show how embodiments of the same may be carried into effect, reference will now be made, by way of example, to the accompanying diagrammatic drawings in which:
Figure 1 is a schematic view showing a television which can control its operation through speech recognition;
Figure 2 shows an electronic appliance which can prevent malfunction in speech recognition and improve a speech recognition rate in accordance with a preferred embodiment of the present invention;
Figure 3 is a detailed block diagram of a determiner in Figure 2; and
Figure 4 is a flow chart showing the method for preventing malfunction in speech recognition and improving a speech recognition rate in accordance with the preferred embodiment of the present invention.

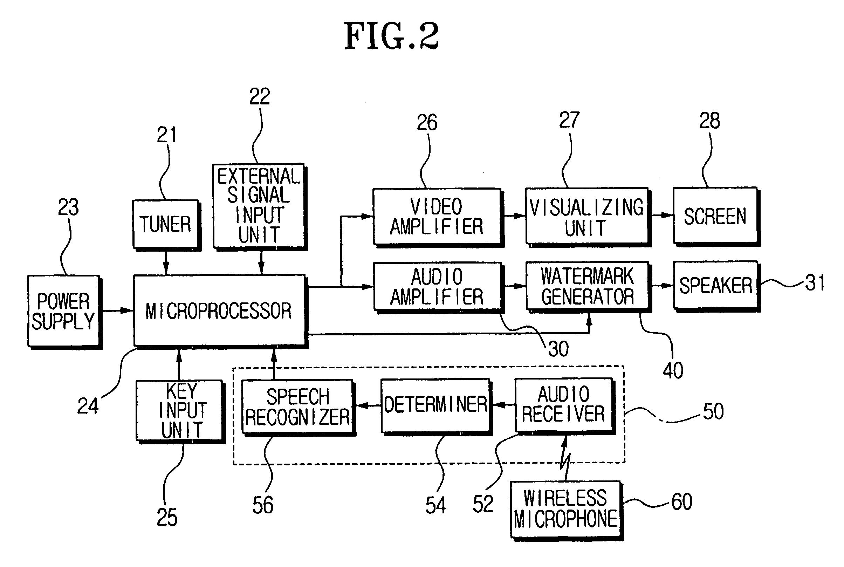

Figure 2 shows an electronic appliance which can prevent malfunction in speech recognition and improve a speech recognition rate in accordance with a preferred embodiment of the present invention. The present embodiment is illustrated with a television as an example of the electronic appliance. Referring to FIG 2, the electronic appliance comprises a tuner 21 for receiving the broadcast signals, an external signal input unit 22 for receiving the reproduced signals from an image reproducer such as a VTR and a DVDP, a microprocessor 24 for selectively outputting the signals input from the tuner 21 and the external signal input unit 22, a power supply 23 for supplying electrical power to the microprocessor 24, a key input unit 25 for inputting the control commands relating to the desired operation to the microprocessor 24, and a sound reception control unit 50 for controlling the microprocessor 24 in relation to the corresponding operation by speech recognition.

The television in the drawing is comprised of a video amplifier 26 for amplifying the video signals among the signals output from the microprocessor 24, a visualizing unit 27 for converting the amplified video signals into a format possible to display, and a screen 28 for displaying the reformatted video signals. Additionally, the television comprises an audio amplifier 30 for amplifying the audio signals among the signals output from the microprocessor 24, a watermark generator 40 for extracting spectrum information of the amplified audio signals and adding the extracted spectrum information to the amplified audio signals, and a speaker 31 for amplifying and outputting audio signals to which the spectrum information is added as the audible sounds.

Meanwhile, the sound reception control unit 50 is comprised of a sound receiver 52 for receiving an audio signal inputted such as from a wireless microphone 60, a determiner 54 for determining whether the audio signals received in the sound receiver 52 are the sounds output from the speaker 31 or user's speech signals, and a speech recognizer 56 for detecting the command corresponding to the result of the speech pattern recognition of the received sound and transmitting the command to the microprocessor 24 after the sound signal is recognized as the user's speech signal in the determiner 54.

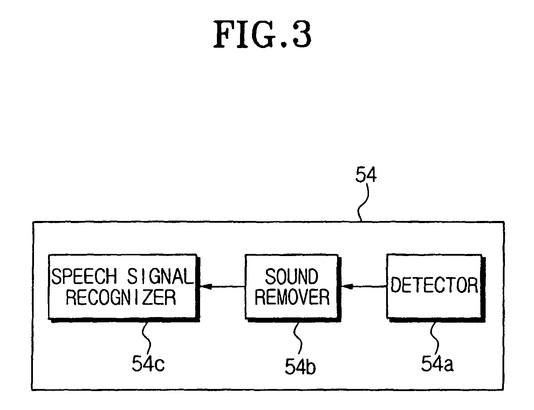

Figure 3 is a detailed block diagram of the determiner 54 shown in FIG 2. As shown in Figure 3, the determiner 54 comprises a detector 54a for searching for the inserted watermark information from the audio signal received in the sound receiver 52, a sound remover 54b for removing the audio signals including the watermark information by using an audio spectrum recognized in the detector 54a when the watermark information is detected, and a speech signal recognizer 54c for recognizing the existence of a speech signal through the energy level of an audio signal among the sound signals from which the audio signals are removed.

In the preferred embodiment, the wireless microphone 60 also has a wireless remote control function as it is provided with a key input panel (not shown) which can control the operation of the television wirelessly. The microphone 60 is provided with a mode conversion key for switching between a general mode for the television viewing and a speech recognition mode. The general mode is a mode in which the television can be viewed by controlling the operation of the microprocessor 24 according to the key selection of the wireless microphone 60 and the key input unit 25. The speech recognition mode is a mode in which the microprocessor can be controlled by receiving speech through the sound reception control unit 50.

Meanwhile, the operation of a watermark generator 40 is set to selectively operate only when the speech recognition mode is selected through the wireless microphone 60. Preferably, if a user converts the mode to the speech recognition mode by selecting the mode conversion key on the wireless microphone 60, the sound reception control unit 50 transmits the signal alerting the conversion into the speech recognition mode to the microprocessor 24. Accordingly, in the general mode, the microprocessor 24 outputs the audio signals which are amplified without the operation of the watermark generator 40 through the speaker 31. When a signal notifying the mode conversion to the speech recognition mode is received from the sound reception control unit 50, the microprocessor 24 controls the watermark generator 40 so as to add the spectrum information of the audio signal to the amplified audio signal and output it through the speaker 31. The spectrum information of the audio signal is called watermark information. The watermark information is hidden information which contains the information about the original signal without giving any influence to the quality of the original signal. Accordingly, the user only listens to the sound corresponding to the audio signal although the audio signal including the watermark information is output through the speaker 31.

Meanwhile, watermark information recognition by detecting the spectrum information of the audio signal in the watermark generator 40 generally uses the Linear Predictive Coding (LPC) which samples the audio signal and calculates the coefficients through spectrum transform. Accordingly, the detector 54a searches for the spectrum information inserted as the watermark information from the audio signal received in the sound receiver 52, and the sound remover 54b removes the audio signal including the watermark information using the spectrum information of the sound detected in the detector 54a. At this point, the speech signal recognizer 54c disregards the remaining sound signals. That is, the speech signal recognizer 54c removes those signals of the external sound which are considered not to contain any speech signals because they have an energy level lower than a threshold value and transmits those signals which are considered to contain speech signals because they have an energy level higher than the threshold value. The speech recognizer 56 recognizes the input speech signals through speech pattern recognition and detects the corresponding command. The detected command is transmitted to the microprocessor 24 so that the microprocessor 24 performs the operation corresponding to the command.

Accordingly, in the speech recognition mode, the audio signal can be detected by the watermark information during speech recognition in the determiner 54 by detecting the watermark information of the audio signal generated in the watermark generator 40 and added to the audio signal before the audio signal is generated through the speaker 31.

Consequently, the speech recognizer 56 can detect the corresponding commands by speech pattern recognition of only the speech signal among the signals of the external sound, and the microprocessor 24 can prevent the unintended operation of the electronic appliance caused by errors in speech recognition.

Meanwhile, some examples of the commands controllable by the user's speech are power on/off, channel selection, volume control and mute on/off. Power on/off controls the supply of power from the power supply 23 to the respective parts of the television, and the channel selection controls the microprocessor 24 in order to select a channel when the number of the corresponding channel is pronounced. Volume control controls the audio amplifier 30 for adjusting the volume in accordance with the words "volume up" or "volume down" pronounced by the user. Mute on/off controls the output of the audio signal by controlling the audio amplifier 31 in accordance with the word "mute on", pronounced by the user.

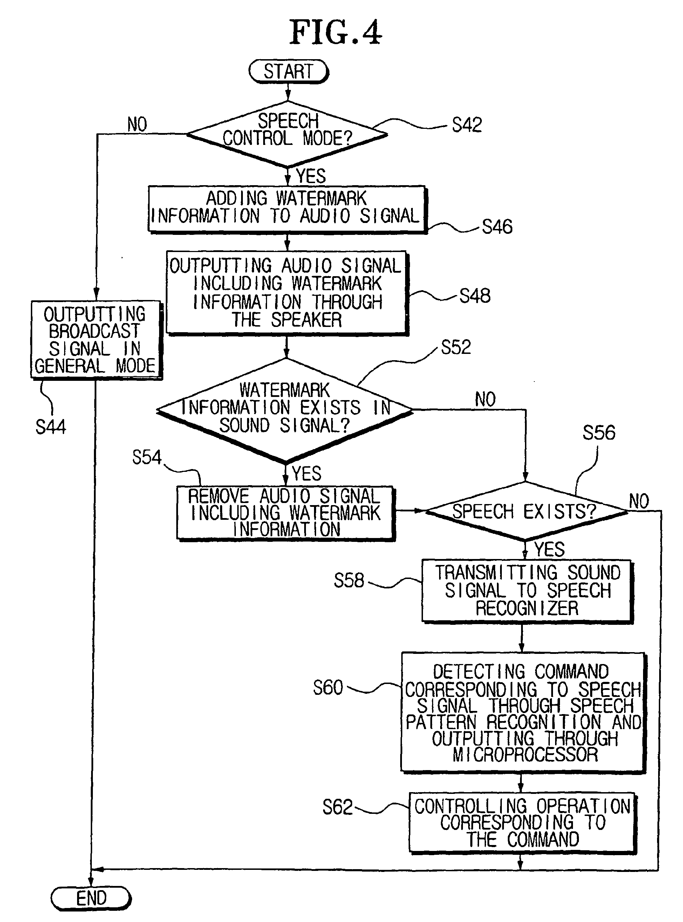

Figure 4 is a flowchart of a preferred embodiment of the method for preventing errors in speech recognition of an electronic appliance according to the present invention. Referring to the drawing, the microprocessor 24 first determines if the present control signal input mode is the speech control mode according to the selection of the mode key on the wireless microphone 60 while receiving the reproduction signal input from the broadcast signal or the reproduction device when the power is on (Step 42). If it is recognized to be in the non-speech control mode at the step (S42), the microprocessor 24 enables the received broadcast signal and the reproduction signal to be output through the screen 28 and the speaker 31 in the general mode (S44). If it is recognized to be in the speech control mode at the step (S42), the microprocessor 24 controls the watermark generator 40 and enables it to add watermark information to the amplified audio signals (S46). The audio signal with the watermark information added is amplified and output through the speaker 31 (S48).

In the meantime, the detector 54a detects the existence of the watermark information from the signals of the external sound (S52). If a signal including the watermark information is detected from the signal of the external sound in the step (S52), it can be identified that among the signals of the external sound, an audio signal from the speaker 31 is included. Accordingly, the sound remover 54b removes the detected signals including the watermark information, which are the audio signals output from the speaker 31, from the signals of the external sound (S54).

Additionally, the speech signal recognizer 54c identifies the existence of the speech signal by comparing the energy level of the sound signals that remain after removing the audio signal from the signals of the external sound with the threshold value (S56). If the sound signals which remain after removing the audio signal from the signals of the external sound have their energy level lower than the threshold value, they will be identified as not containing any speech signals and disregarded, and if higher, they will be identified as containing the speech signals and transmitted to the speech recognizer 56 (S58).

Meanwhile, if the watermark information is not detected among the signals of the external sound at the step (S52), the signals are transmitted to the speech signal recognizer 54c, and the speech signal recognizer 54c identifies the existence of the speech signal by comparing the energy level of the signals with the threshold value (S56). If the energy levels of the sound signals are lower than the threshold value, they are identified as not containing any speech signals and the signals are disregarded, and if higher, they are identified as containing the speech signal and the signals are transmitted to the speech recognizer 56 (S58).

In regard to the received speech signals which are recognized as speech signals at the step S58, the speech recognizer 56 outputs a command relevant to the speech signal through the microprocessor 24 by speech pattern recognition of the received speech signals (S60). Accordingly, the microprocessor 24 controls the television in relation to the received commands (S62)

Consequently, errors in operation of the television due to faulty speech recognition can be prevented, or at least significantly reduced, by adding the watermark information to the audio signal output from the speaker 31, and identifying the existence of the watermark information of the signal of the external sound that are transmitted through the wireless microphone 60 and detecting the user's speech signal.

Meanwhile, the embodiment of the present invention indicates a single electronic appliance equipped with both the watermark generator 40 and the sound reception control unit 50. However, the present embodiment can be applied in the case of the watermark generator 40 and the sound reception control unit 50 existing separately in two different electronic appliances. That is, the present embodiment can be equally applied if the watermark generator 40 is adopted prior to the speaker of an electronic appliance which is capable of outputting audio signals through the speaker, and if the sound reception control unit 50 is adopted to an electronic appliance which is capable of operating through speech recognition.

In the present invention, an audio signal can be detected on the basis of the watermark information when the determiner 54 determines the speech signal since the watermark information of the audio signal is added to the audio signals and then output through the speaker 31. Accordingly, the speech recognizer 56 detects the corresponding commands by recognizing the pattern of only the speech signals among the signals of the external sound and consequently the microprocessor 24 can prevent improper operation of the electronic appliance caused by errors in speech recognition.

Although the preferred embodiment of the present invention has been described, it will be understood by those skilled in the art that the present invention should not be limited to the described preferred embodiment. Various changes and modifications can be made within the scope of the present invention as defined by the appended claims.

## Claims

1. An electronic appliance comprising:
a speaker (31) for outputting an audio signal;
a sound receiver (52) for receiving an external sound;
a determiner (54) for determining whether a signal of the external sound received in the sound receiver is the audio signal output from the speaker;
a speech recognizer (56) for recognizing the external sound and outputting a command corresponding to the external sound when the determiner determines that the signal of the external sound is different from the audio signal; and
a control unit (24) for receiving the command and controlling an operation corresponding to the command, **characterised by** further comprising an identifying information provider (40) for adding predetermined identifying information to the audio signal, wherein the determiner (54) determines whether the signal of the external sound is the audio signal based on existence of the identifying information in the signals of the external sound received by the speech recognizer.

2. The electronic appliance of claim 1 wherein the identifying information is watermark information including spectrum information about the audio signal, the identifying information provider is a watermark generator (40) for adding the watermark information to the audio signal, and the determiner (54) determines the existence of the audio signal based on the existence of the watermark information in the signal of the external sound received in the speech recognizer.

3. The electronic appliance of claim 2, wherein the determiner comprises:
a detector (54a) for searching for the watermark information inserted to the signal of the external sound received in the sound receiver;
a sound remover (54b) for removing the audio signal including the watermark information using the spectrum information detected in the detector in case the watermark information is detected; and
a speech signal recognizer (54c) for identifying the existence of a speech signal based on an energy level of the signal of the external sound from which the audio signal is removed.

4. The electronic appliance of any preceding claim, wherein an operating mode of the identifying information provider (40) is set according to a user's selection.

5. A method for receiving sound, comprising the steps of:
a) outputting an audio signal through a speaker (31);
b) removing the audio signal from a signal of an external sound in case the audio signal is included in the signal of the external sound;
outputting a command corresponding to the external sound by recognizing the external sound; and
receiving the command and controlling an operation corresponding to the command, **characterised by** further comprising a step of adding predetermined identifying information to the audio signal before the step a), wherein, in the step b), existence of the audio signal is determined based on existence of the identifying information in the signal of the external sound.

6. The method for receiving sound of claim 5, wherein the identifying information is watermark information including spectrum information about the audio signal, the watermark information is added to the audio signal in the adding step, and the existence of the audio signal is determined based on existence of the watermark information in the signal of the external sound in the step b).

## Patentansprüche

1. Ein elektronisches Gerät, umfassend:
einen Lautsprecher (31) zum Ausgeben eines Audiosignals;
einen Tonempfänger (52) zum Empfangen eines externen Tons;
eine Bestimmungseinrichtung (54) zum Bestimmen, ob ein Signal des externen Tons, der in dem Tonempfänger empfangen wird, das Audiosignal ist, das von dem Lautsprecher ausgegeben wird;
eine Spracherkennungseinrichtung (56) zum Erkennen des externen Tons und Ausgeben eines Befehls entsprechend dem externen Ton, wenn die Bestimmungseinrichtung bestimmt, dass sich das Signal des externen Tons von dem Audiosignal unterscheidet; und
eine Steuereinheit (24) zum Empfangen des Befehls und Steuern einer Operation entsprechend dem Befehl, **gekennzeichnet** ferner zu umfassen eine Identifikationsinformations-Bereitstellungseinrichtung (40) zum Hinzufügen vorbestimmter Identifikationsinformation zu dem Audiosignal, wobei die Bestimmungseinrichtung (54) bestimmt, ob das Signal des externen Tons das Audiosignal ist, basierend auf Vorhandensein der Identifikationsinformation in den Signalen des externen Tons, der durch die Spracherkennungseinrichtung empfangen wird.

2. Das elektronische Gerät nach Anspruch 1, wobei die Identifikationsinformation Wasserzeicheninformation ist, die Spektrumsinformation über das Audiosignal enthält, die Identifikationsinformations-Bereitstellungseinrichtung ein Wasserzeichengenerator (40) zum Hinzufügen der Wasserzeicheninformation zu dem Audiosignal ist und die Bestimmungseinrichtung (54) das Vorhandensein des Audiosignals basierend auf dem Vorhandensein der Wasserzeicheninformation in dem Signal des externen Tons bestimmt, der in der Spracherkennungseinrichtung empfangen wird.

3. Das elektronische Gerät nach Anspruch 2, wobei die Bestimmungseinrichtung umfasst:
einen Detektor (54a) zum Suchen nach der Wasserzeicheninformation, die in das Signal des externen Tons eingefügt ist, der in dem Tonempfänger empfangen wird;
eine Tonentfernungseinrichtung (54b) zum Entfernen des Audiosignals, das die Wasserzeicheninformation enthält, unter Verwendung der Spektrumsinformation, die in dem Detektor erfasst wird, in einem Fall, in dem die Wasserzeicheninformation erfasst wird; und
eine Sprachsignal-Erkennungseinrichtung (54c) zum Identifizieren des Vorhandenseins von einem Sprachsignal basierend auf einem Energiepegel des Signals des externen Tons, aus dem das Audiosignal entfernt ist.

4. Das elektronische Gerät nach einem beliebigen vorangehenden Anspruch, wobei ein Operationsmodus der Identifikationsinformations-Bereitstellungseinrichtung (40) gemäß einer Auswahl eines Benutzers gesetzt wird.

5. Ein Verfahren zum Empfangen von Ton, die Schritte umfassend:
a) Ausgeben eines Audiosignals durch einen Lautsprecher (31) ;
b) Entfernen des Audiosignals aus einem Signal eines externen Tons in einem Fall, in dem das Audiosignal in dem Signal des externen Tons enthalten ist;
Ausgeben eines Befehls entsprechend dem externen Ton durch Erkennen des externen Tons; und
Empfangen des Befehls und Steuern einer Operation entsprechend dem Befehl, **gekennzeichnet** ferner zu umfassen einen Schritt zum Hinzufügen vorbestimmter Identifikationsinformation zu dem Audiosignal vor dem Schritt a), wobei in dem Schritt b) Vorhandensein des Audiosignals basierend auf Vorhandensein der Identifikationsinformation in dem Signal des externen Tons bestimmt wird.

6. Das Verfahren zum Empfangen von Ton nach Anspruch 5, wobei die Identifikationsinformation Wasserzeicheninformation ist, die Spektrumsinformation über das Audiosignal enthält, die Wasserzeicheninformation dem Audiosignal in dem Hinzufügungsschritt hinzugefügt wird und das Vorhandensein des Audiosignals basierend auf Vorhandensein der Wasserzeicheninformation in dem Signal des externen Tons in dem Schritt b) bestimmt wird.

## Revendications

1. Appareil électronique comprenant:
un haut-parleur (31) destiné à fournir un signal audio;
un récepteur de son (52) destiné à recevoir un son extérieur;
un organe de détermination (54) destiné à déterminer si un signal du son extérieur reçu dans le récepteur de son est ou non le signal audio fourni par le haut-parleur;
un dispositif (56) de reconnaissance de la parole destiné à reconnaître le son extérieur et à fournir une instruction correspondant au son extérieur lorsque l'organe de détermination détermine que le signal du son extérieur est différent du signal audio; et
une unité de commande (24) destinée à recevoir l'instruction et à commander une opération correspondant à l'instruction,
**caractérisé en ce qu'**il comprend également un fournisseur d'informations d'identification (40) destiné à ajouter des informations d'identification prédéterminées au signal audio, l'organe de détermination (54) déterminant si le signal du son extérieur est le signal audio en fonction de la présence des informations d'identification dans le signal du son extérieur reçu par le dispositif de reconnaissance de la parole.

2. Appareil électronique selon la revendication 1, dans lequel les informations d'identification sont des informations en filigrane comprenant des informations spectrales concernant le signal audio, le fournisseur d'informations d'identification est un générateur de filigrane (40) destiné à ajouter les informations en filigrane au signal audio, et l'organe de détermination (54) détermine la présence du signal audio en fonction de la présence des informations en filigrane dans le signal du son extérieur reçu dans le dispositif de reconnaissance de la parole.

3. Appareil électronique selon la revendication 2, dans lequel l'organe de détermination comprend:
un détecteur (54a) destiné à rechercher les informations en filigrane insérées dans le signal du son extérieur reçu dans le récepteur de son;
un suppresseur de son (54b) pour supprimer le signal audio comprenant les informations en filigrane à l'aide des informations spectrales détectées dans le détecteur en cas de détection des informations en filigrane; et
un dispositif de reconnaissance de signal vocal (54c) destiné à identifier la présence d'un signal vocal en fonction d'un niveau d'énergie du signal du son extérieur duquel le signal audio a été supprimé.

4. Appareil électronique selon l'une quelconque des revendications précédentes, dans lequel un mode de fonctionnement du fournisseur d'informations d'identification (40) est défini en fonction d'une sélection effectuée par un utilisateur.

5. Procédé de réception d'un son, comprenant les étapes de:
a) fourniture d'un signal audio par l'intermédiaire d'un haut-parleur (31);
b) suppression du signal audio d'un signal d'un son extérieur en cas de présence du signal audio dans le signal du son extérieur;
fourniture d'une instruction correspondant au son extérieur par une reconnaissance du son extérieur; et
réception de l'instruction et commande d'une opération correspondant à l'instruction,
**caractérisé en ce qu'**il comprend également une étape d'addition d'informations d'identification prédéterminées au signal audio avant l'étape a), la présence du signal audio étant déterminée au cours de l'étape b) en fonction de la présence des informations d'identification dans le signal du son extérieur.

6. Procédé de réception d'un son selon la revendication 5, dans lequel les informations d'identification sont des informations en filigrane comprenant des informations spectrales concernant le signal audio, les informations en filigrane sont ajoutées au signal audio au cours de l'étape d'addition, et la présence du signal audio est déterminée en fonction de la présence des informations en filigrane dans le signal du son extérieur au cours de l'étape b).
